# EUROPÄISCHE PATENTSCHRIFT

(11) **EP 0 749 701 B1**
(45) Veröffentlichungstag und Bekanntmachung des Hinweises auf die Patenterteilung: **20.09.2000**
(21) Anmeldenummer: 96109573.4
(22) Anmeldetag: 14.06.1996
(51) Int. Cl.: A41F 9/02, A41D 27/24

(54) **Ringförmig geschlossenes Band aus textilem Material, insbesondere zur Verwendung als Taillenband**
Tubular textile band, in particular to use as a waistband
Bande tubulaire textile, en particulier pour utilisation comme ceinture de taille

(30) Priorität: 23.06.1995 DE 19522871
(43) Veröffentlichungstag der Anmeldung: 27.12.1996
(73) Patentinhaber: Triumph International Aktiengesellschaft, 80335 München (DE)
(72) Erfinder: Grau, Günter, 73560 Böbingen/Rems (DE)
(74) Vertreter: Patentanwälte Möll und Bitterich

(56) Entgegenhaltungen:
- EP-A- 0 164 236
- FR-A- 2 079 653
- US-A- 2 177 425
- US-A- 4 327 448
- US-A- 4 501 782
- US-A- 5 286 542

## Beschreibung

Die Erfindung betrifft ein ringförmig geschlossenes Band aus textilem Material, insbesondere zur Verwendung als Taillenband zur Konfektionierung von Schlüpfern oder dergleichen sowie ein Verfahren zum Herstellen eines solchen Bandes.

Bei der Konfektionierung von Schlüpfern für Damen, Herren und Kinder wird üblicherweise als Taillenband ein elastisches Band mit einer dehnbaren Naht angenäht. Dabei kann das Taillenband entweder als Halbfertigerzeugnis in Form eines durch eine Nähnahtverbindung geschlossenen Ringes vorgefertigt und dann mit dem oberen Rand des Schlüpfers vernäht oder als Endlosband nach bestimmten Maßangaben der Nähmaschine zugeführt und im Verlauf des Fertigungsprozesses des Schlüpfers an dessen oberen Rand angenäht und zugleich zusammengenäht werden.

Das Taillenband besteht meist aus einem Abschnitt einer Materialbahn, deren Elastizität aus als Kettfäden eingearbeiteten elastischen Fäden folgt. Zur Gewährleistung der Haltbarkeit der Verbindung der beiden Enden des Abschnitts zu einem geschlossenen Ring kommt deshalb der möglichst vollständigen Einbindung zumindest der Kettfäden in die Verbindung besondere Bedeutung zu. Eine haltbare Verbindung konnte bislang nur dadurch bewerkstelligt werden, daß die beiden Bandenden überlappt vernäht wurden. Wenn auch ein solcher Überlappungsstoß üblicherweise am Rücken angeordnet wird, so stellt er doch eine Unstetigkeitsstelle im Verlauf des elastischen Taillenbandes dar, die Druckstellen am Körper erzeugen kann und unter leichter Kleidung aufträgt.

Es hat auch schon Versuche gegeben, einen kantengleichen stumpfen Stoß der Enden eines solchen Taillenbandes durch Übernähen zu erzeugen. Da diese Verbindungsnähte sich aber nur über eine verhältnismäßig kurze Strecke in den normalen Bandbereich hinein erstrecken können, kann nicht immer sichergestellt werden, daß alle elastischen Kettfäden auch sicher in die Naht eingebunden sind. Deshalb konnten sich auch solche Lösungen nicht durchsetzen.

Grundsätzlich ist es bekannt, Materialien aus thermoplastischen Faserstoffen mittels metallischer Werkzeuge unter Anwendung hoher Temperatur oder von Ultraschall zu trennen und zu verbinden (Siehe US-4-327 448). Bei der Trennung ergibt sich eine Kantenverschweißung mit dem Nachteil scharfer Kanten; bei der Verbindung Liegen die Werkstücke zwei- oder mehrlagig aufeinander.

Ein weiterer, mit der Vorfertigung solcher Taillenbänder verbundener Nachteil liegt darin, daß Taillenbänder mit unterschiedlichem Umfang vorgefertigt und gesondert auf Lager gehalten werden müssen, von wo sie bei der Konfektionierung der Schlüpfer je nach der zu fertigenden Größe abgerufen werden müssen. Dies erfordert nicht nur einen beträchtlichen Lageraufwand, sondern auch einen entsprechenden Organisationsaufwand.

Vor diesem Hintergrund liegt der Erfindung die Aufgabe zugrunde, eine Möglichkeit zu finden, um einen kantengerechten, zuverlässigen Stoß der Enden eines solchen Taillenbandes zu ermöglichen und möglichst auch eine rationellere Vorfertigung zu erreichen.

Erfindungsgemäß wird diese Aufgabe durch ein ringförmig geschlossenes Band mit den Merkmalen des Anspruchs 1 gelöst.

Ein zweckmäßiges Verfahren zum Herstellen eines solchen Bandes ist im Anspruch 2 angegeben.

Vorteilhafte Weiterbildungen ergeben sich aus den Unteransprüchen.

Der Vorteil der Erfindung basiert darauf, daß die in diesem Bereich vorwiegend verwendeten elastischen Bänder ihre Elastizität vorwiegend aus der Verwendung von Kunststoffasern in der Kette beziehen, die thermoplastische Eigenschaften aufweisen und demzufolge durch Anwendung von Ultraschall oder Wärme verschweißt werden können. Die Erfindung ist selbstverständlich aber auch auf unelastische Bänder aus entsprechendem Material anwendbar.

So gelingt es, wenn ein Bandabschnitt zu einer Schlaufe gefaltet wird, nach Übereinanderlegen der beiden Enden des Abschnitts diese durch Schweißung mit Druckanwendung unter vollständiger Durchtrennung an den übereinanderliegenden Enden so miteinander zu verbinden, daß nach Auffalten der Schlaufe die beiden aufeinanderliegend miteinander verschweißten Enden in eine gestreckte Lage geraten und so kantengleich stumpf miteinander verschweißt sind. Vor allem dann, wenn die Fäden in Kette und Schuß kurz eingebunden sind, gelingt erfindungsgemäß eine so vollständige Verschweißung aller Fäden, daß die Verbindungsstelle nach dem Auffalten der Schlaufe einer Zugbelastung in Bandlängsrichtung ausgesetzt werden kann. Auf diese Weise gelingt eine praktisch unsichtbare, jedenfalls nicht auftragende Verbindung der beiden Enden eines Bandabschnitts zu einem geschlossenen Ring.

Ein weiterer Vorteil der Erfindung besteht darin, daß diese Verschweißung unmittelbar an einer von einer Rolle ablaufenden endlosen Materialbahn beliebiger Breite erfolgen kann, so daß die Taillenbänder jeweils in den benötigten Weiten gewissermaßen vor Ort gefertigt werden können und eine Lagerhaltung von vorgefertigten Bändern vermieden wird. Hierdurch wird zugleich eine Materialeinsparung erzielt, da nicht mehr überlappt werden muß.

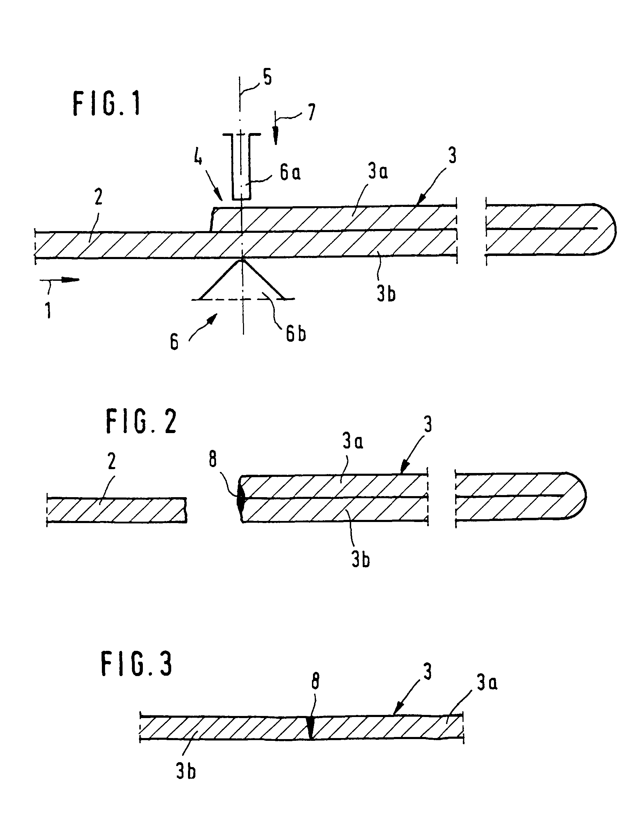

Die Erfindung wird nachstehend anhand der Zeichnung näher erläutert, die in den Figuren 1, 2 und 3 im schematischen Vertikalschnitt aufeinanderfolgende Stationen der Herstellung eines erfindungsgemäßen Bandes zeigt.

In Fig. 1 ist schematisch dargestellt, wie an einer von einer Rolle in Richtung des Pfeils 1 ablaufenden Materialbahn 2 eines elastischen Bandes ein Abschnitt 3 zu einer Schlaufe gelegt wird. Hierzu werden das obere Trum 3a flach auf das untere Trum 3b gelegt und das Ende 4 entsprechend der Weite des herzustellenden ringförmigen Bandes zu der nächstfolgenden Trennstelle an der strichpunktiert angedeuteten Trennachse 5 zurückgeführt. Der doppellagige Bereich der Materialbahn wird sodann in den Wirkungsbereich eines thermisch auf die Materialbahn einwirkenden metallischen Werkzeugs, insbesondere eines Ultraschallschweißgerätes 6 gebracht, das in Fig. 1 lediglich durch eine Sonotrode 6a und ein unteres Widerlager 6b angedeutet ist. Das Widerlager 6b hat in seinem oberen, der Materialbahn 2 zugewandten Teil dreieckförmigen Querschnitt, um nicht nur eine Verschweißung, sondern auch eine Trennung der Bahnen zu ermöglichen.

Durch Herabführen der Sonotrode 6a in Richtung des Pfeils 7 wird dem zwischen Sonotrode 6a und Widerlager 6b befindlichen Material Energie zugeführt, die zu einer Wärmeentwicklung und somit zu einem Verschweißen der Kunststoffäden in der Materialbahn 2 führen. Die die beiden übereinanderliegenden Bandenden verbindende Schweißnaht ist in Fig. 2, die die Situation nach Schweißung und Trennung zeigt, bei 8 angedeutet. Damit sind die beiden Enden der Schlaufe 3 zu einem Ring verbunden.

Der Ring kann danach aufgefaltet werden. Dadurch geraten die zuvor noch aufeinanderliegenden Bandenden in eine gestreckte Lage (Fig. 3), in der die Enden kantengleich stumpf miteinander gestoßen sind. Die durch quer zum Band verlaufende Einwirkung eines Schweißwerkzeugs erzeugte Verbindung reicht über die Dicke des Bandes und kann so nach dem Auffalten einer Zugbelastung in Längsrichtung ausgesetzt werden.

Um die Haltbarkeit der Schweißnaht aufgrund der materialtechnischen Bedingungen zu erhöhen, ist es möglich, die Materialbahn in den Bereichen unmittelbar neben der Schweißnaht 8 noch in sich zu verschweißen, wodurch die Kettfäden zusätzlich eingebunden werden. Diese Verschweißung ist mit einer Druckanwendung rechtwinklig zur Bandebene verbunden, die Eindrückungen hinterläßt, die auch ornamental ausgestaltet sein können.

## Patentansprüche

1. Ringförmig geschlossenes Band aus textilem Material, insbesondere zur Verwendung als Taillenband zur Konfektionierung von Schlüpfern oder dergleichen, das zumindest teilweise aus thermoplastisch verschmelzbaren Fasern besteht, dadurch gekennzeichnet, daß die Enden des aus einem Abschnitt (3) einer Materialbahn (2) bestehenden Bandes kantengleich stumpf miteinander verschweißt sind.

2. Verfahren zum Herstellen eines Bandes gemäß Anspruch 1,
dadurch gekennzeichnet,
daß die beiden Enden eines Bahnabschnitts (3) unter Bildung einer Schlaufe von dem Umfang des herzustellenden Bandes entsprechender Länge aufeinandergelegt und in geringem Abstand von den Endkanten durch Schweißung miteinander verbunden werden, wobei zugleich eine Durchtrennung an der Schweißstelle (8) erfolgt und
daß schließlich die Schlaufe zu einem Ring aufgefaltet wird.

3. Verfahren nach Anspruch 2, dadurch gekennzeichnet, daß der Bahnabschnitt (3) noch am Ende einer Materialbahn (2) angeordnet ist und zugleich mit der Schweißung von dieser abgetrennt wird.

4. Verfahren nach Anspruch 2 oder 3, dadurch gekennzeichnet, daß die Schweißung und Trennung durch Anwendung von Ultraschall erfolgen.

5. Verfahren nach einem der Ansprüche 2 bis 4, dadurch gekennzeichnet, daß nach Auffaltung der Schlaufe das Bahnmaterial beidseits der Schweißnaht zusätzlich flächig verschweißt wird.

6. Verfahren nach Anspruch 5, dadurch gekennzeichnet, daß die flächige Verschweißung ornamental ausgestaltet ist.

## Claims

1. An annularly closed band of textile material, in particular for use as a waist band for the manufacture of panties or the like, which consists at least partly of thermoplastically fusible fibres, characterised in that the ends of the band consisting of a portion (3) of web of material (2) are butt welded together with congruent edges.

2. A method of producing a band according to Claim 1, characterised in that the two ends of one web portion (3) are placed one above the other to form a loop of a length corresponding to the circumference of the band to be produced and are joined together by welding at a small distance from the end edges, whereupon simultaneously severing takes place at the weld point (8), and in that finally the loop is folded to form a ring.

3. A method according to Claim 2, characterised in that the web portion (3) is disposed at the end of a web of material (2) and is separated therefrom simultaneously with the welding.

4. A method according to Claim 2 or 3, characterised in that the welding and separation are carried out by the application of ultrasound.

5. A method according to any one of Claims 2 to 4, characterised in that after folding up the loop the web material is additionally welded in a planar manner on either side of the weld seam.

6. A method according to Claim 5, characterised in that the planar welding is of ornamental design.

## Revendications

1. Ruban en matière textile fermé en forme d'anneau, utilisé en particulier comme ruban de ceinture destiné à la confection de slips ou articles similaires, formé au moins en partie de fibres thermoplastiques fusibles, caractérisé en ce que les extrémités du ruban formé par un segment (3) d'une bande continue de matière (2) sont soudées bout à bout l'une contre l'autre sur les mêmes bords.

2. Procédé de fabrication d'une bande selon la revendication 1, caractérisé en ce que les deux extrémités d'un segment de bande (3) sont posées l'une sur l'autre en formant une boucle de la dimension du ruban à fabriquer et sont assemblées par soudage l'une avec l'autre à une faible distance des bords, en réalisant en même temps une coupe au niveau de la zone soudée (8), et en ce que la boucle est enfin dépliée pour former un anneau.

3. Procédé selon la revendication 2, caractérisé en ce que le segment de bande (3) est encore disposé à l'extrémité d'une bande continue de matière (2) et est séparé de celle-ci au moment même de l'exécution de la soudure.

4. Procédé selon la revendication 2 ou 3, caractérisé en ce que la soudure et la coupe sont effectuées au moyen d'ultrasons.

5. Procédé selon l'une quelconque des revendications 2 à 4, caractérisé en ce que, après le dépliage de la boucle, la matière en bande est en plus soudée à plat de part et d'autre du cordon de soudure.

6. Procédé selon la revendication 5, caractérisé en ce que la soudure à plat est conçue de manière ornementale.
